# EUROPEAN PATENT SPECIFICATION

(11) **EP 3 859 085 B1**
(45) Date of publication and mention of the grant of the patent: **19.07.2023**
(21) Application number: 20217757.2
(22) Date of filing: 30.12.2020
(51) Int. Cl.: E01F 15/04

(54) **A POST UNIT FOR SAFETY ROAD BARRIERS, A SAFETY ROAD BARRIER, AND A METHOD FOR ASSEMBLING THE POST UNIT**
PFOSTENEINHEIT FÜR STRASSENSICHERHEITSBARRIEREN, STRASSENSICHERHEITSBARRIERE UND VERFAHREN ZUR MONTAGE DER PFOSTENEINHEIT
UNITÉ DE POSTE POUR BARRIÈRES DE SÉCURITÉ ROUTIÈRE, BARRIÈRE DE SÉCURITÉ ROUTIÈRE, ET PROCÉDÉ D'ASSEMBLAGE DE L'UNITÉ DE POSTE

(30) Priority: 28.01.2020 SE 2050081
(43) Date of publication of application: 04.08.2021
(73) Proprietor: Nordic Road Safety AB, 861 36 Timrå (SE)
(72) Inventor: GISSLIN, Lars-Åke, SE-863 33 Sundsbruk (SE)
(74) Representative: Swea IP Law AB

(56) References cited:
- EP-A2- 1 094 158
- DE-A1-102008 048 810
- US-A- 4 819 916
- US-A1- 2008 121 856

## Description

### Technical field

The present invention relates to post units for safety road barriers. The invention also relates to a safety road barrier including the post unit. The invention further relates to a method for assembling the post unit.

### Background

Safety road barriers are used as barriers along roads to prevent cars from driving off the road and by that prevent accidents. The safety road barriers can achieve absorption of energy during a collision of a vehicle driving on the road. The fundamental object of a safety road barrier is thus to provide protection of health and life of traffic participants and providing safety for persons and buildings located in surroundings of the road.

A typical safety road barrier comprises a number of substantially vertical posts fixed to the ground and a number of substantially horizontal guardrails mounted on the posts. In many cases, disassembling the safety road barrier is needed in order to enable driving across the barrier, for example, in a case of a road accident which requires a crossing through a safety road barrier. At some places, it is even a demand that the posts can easily be removed by a human. A known solution to this problem is to use post units comprising a base part, which is to be set in the ground, and a post removably attached to the base part. The base part has a hollow body defining a space for receiving the post, and a fastening arrangement for fastening the post to the base part. It is common to insert the base part directly into the ground by striking it with a hammer. In such case, it is necessary that the base part is robust. The base part can, for example, also be named socket, foundation, and mounting device.

US2008/121856 discloses an example of a safety road barrier including a foundation tube, a guardrail post partially disposed within the foundation tube, and a spacer disposed between the guardrail post and the foundation tube.

US2019368140 discloses a bollard system comprising a mounting device and a post. The mounting device has a mounting body defining a post receiving passageway and a mounting attachment device disposed on the mounting body. The post has a post attachment device disposed on an insertion end of the post. The post attachment device removably engages the mounting attachment device to secure the post within the post receiving passageway. In one embodiment, the fastening arrangement comprises corresponding threads arranged on the insertion end of the post and at an upper end of the mounting device. In another embodiment, the fastening arrangement is a bayonet joint comprising protrusions arranged on the outside of the post and elongated openings arranged at an upper end of the mounting device for receiving the protrusions. Both embodiments require that the post is turned relative the mounting device, when the post is inserted in the mounting device, during fastening of the post and the mounting device. A problem with this bollard system is that there is a risk that the threads or the elongated openings of the mounting device will be demolished when the mounting device is inserted into the ground.

Treads and bayonet joins can be used for attaching posts having a circular cross-section. However, today it is common to use posts for safety road barriers with other shapes, such as rectangular, oval, C-shape and U-shape. It is also common that the base part has a rectangular cross-section. It is not possible to use threads or bayonet joins for posts with other shapes than circular, since it then is not possible to turn the post relative the base unit, when the post is inserted in the mounting device, until the threads or bayonet parts are engaged to each other.

### Summary

An object of the present invention to provide an improved post unit for safety road barriers, which at least partly alleviates the above-mentioned problems.

According to one aspect, this object is achieved by a post unit as defined in claim 1.

The post unit comprises a post, a base part having a hollow body defining a space for receiving the post, and a fastening member for fastening the post to the base part when the post is inserted into the base part. The fastening member is elongated and has an upper portion comprising a fastening arrangement for fastening the fastening member to the post, and a lower portion adapted to be inserted into the space of the base part. The lower portion comprises a protrusion having a first end adapted to be engaged with a first side wall of the base part when the lower portion is inserted in the base part. The fastening arrangement and the post comprises a respective through-hole, and the fastening arrangement comprises fastening means to be arranged in the through-holes for attaching the upper portion of the fastening member to the post.

The post unit according to the present invention is robust and can withstand large forces from cars crashing into the post.

With a post is meant any type of elongated element suitable for supporting a guardrail in a safety road barrier. The term post is synonymous with the term pole.

The fastening arrangement comprises fastening means for fixedly attaching the upper portion of the fastening member to the post. For example, the fastening means comprises a bolt and a nut. It is also possible to use other types of fastening means, such as a screw, pin, or rivet.

Since the post unit comprises an elongated fastening member having an upper portion comprising a fastening arrangement for attaching the fastening member to the post, and a lower portion adapted to be inserted into the space of the base part, and comprising a protrusion adapted to be engaged with a side wall of the base part, there is no need to turn the post when the post is inserted in the base part in order to fasten the post to the base part. During assembling of post unit, the fastening member is inserted into the base part and engaged with the side wall of the base part. Thereafter, the post is inserted into the base part. In a last step, the fastening member is attached to the post. This means that posts with other shapes than circular, such as rectangular, oval, C-shaped, or U-shaped, can be used. Further, the base part is also allowed to have other shapes than circular, for example, a rectangular cross-section. The post unit is easy to assemble and disassemble for a human on site.

Suitably, the protrusion protrudes perpendicular to a longitudinal axis of the elongated fastening member.

According to an embodiment of the invention, the base part comprises an opening in the first sidewall, and a first end of the protrusion is adapted to protrude into the opening in the first side wall when the lower portion is inserted into the space in the base part. Inn this embodiment, the protrusion is adapted to be engaged with the side wall by insertion through the opening in the first side wall.

The term "the protrusion has a first end adapted to be engaged with a first side wall of the base part" is to be interpreted broadly, and covers an embodiment where the first sidewall of the base part has an opening, and the first end of the protrusion protrudes into the opening in the first side wall.

According to an embodiment of the invention, the diameter of the opening is larger than the diameter of the first end of the protrusion so that there is a play between the protrusion and the first side wall, when the first end of the protrusion is inserted in the opening. The play is, for example, between 1 and 2 mm. This facilitated the insertion of the protrusion in the opening. Further, this allows the opening to be slightly deformed during installation of the base part into the ground.

According to an embodiment of the invention, the opening in the first side wall is circular, and the protrusion has a circular cross-section. The protrusion is adapted to fit in the opening. A circular shape of the opening makes it robust and reduces the risk for deformation of the opening during insertion of the base part into the ground. Further, a circular hole is less prone to dirt in the hole than for example a rectangular hole with its corners.

According to an embodiment of the invention, the protrusion is arranged so that it extends from the first side wall towards a second side wall of the base part, and ends at a distance from the second side wall so that a gap is formed between the protrusion and the second side wall for receiving a rear wall of the post. The gap facilitates the insertion of the protrusion into the opening. Further, the gap allows the rear wall of the post to be inserted between the rear end of the protrusion and the second side wall of the base part.

According to an embodiment of the invention, the width of the gap corresponds to the width of the rear wall of the post so that the rear wall will fit tightly between the protrusion and the second side wall of the base part when the post is inserted into the base part. This embodiment of the post unit can withstand the high forces from cars driving into the post.

According to an embodiment of the invention, the protrusion is arranged so that a second end of the protrusion abuts on the rear wall of the post when the post is inserted into the base part. Thus, the rear wall of the post is fixed between the protrusion and the side wall of the of the base part and the post unit can withstand the high forces from cars driving into the post.

According to an embodiment of the invention, the post is hollow, and the upper portion of the fastening member is adapted to be inserted into the hollow post and to be attached to an inside of the hollow post. The upper portion of the fastening member extends inside the post when the post is inserted into the base part. Thus, the post can be tightly fitted into the space of the base part. Further, since the fastening member is adapted to be disposed inside the post and attached to the inside of the post as well as inside the base part, the upper end of the base part can be level with the ground.

According to an embodiment of the invention, the post comprises an elongated opening extending along the longitudinal direction of the post. This facilitates the insertion of the upper portion of the fastening member into the hollow post and to attach the fastening member to the inside of the hollow post. Accordingly, assembling and disassembling of the post unit is facilitated. Further, it is possible to insert the entire fastening member into the post since the protrusion is allowed to protrude through the elongated opening.

According to an embodiment of the invention, a cross section of the base part comprises two long sides and two short sides, and the opening in the side wall is arranged in one of the long sides. Thus, the length of the protrusion can be reduced.

According to an embodiment of the invention, the fastening arrangement comprises an edge for welding the fastening member to the post. This is a simple and fast way to attach the fastening member to the post.

According to another aspect of the invention, the object of the invention is achieved with a safety road barrier comprising at least two post unit according to the invention, and a guardrail attached to the posts. The posts of are substantially vertically arranged, and the guardrail is substantially horizontally arranged.

According to further aspects of the invention, the object of the invention is achieved with a method for assembling the post unit.

The method comprises:
- inserting the lower portion of the fastening member into the base part,
- inserting the protrusion into the opening in the first side wall of the base part,
- inserting the post partly into the base part such that an upper portion of the fastening member is disposed inside the post, and a lower part of the post is inserted in the gap between the rear part of the protrusion and the second side wall of the base part, and
- attaching the upper portion of the fastening member to the post by means of the fastening arrangement.

The method makes it easy to assemble the post unit.

During installation of the post unit, the base part is inserted into the ground. This step can be done before or after the post unit is assembled.

According to one embodiment of the invention, the upper portion of the fastening member is attached to the post by means of a bolt.

According to one embodiment of the invention, the method comprises inserting the post partly into the base part such that the upper portion of the fastening member is disposed inside the post, and attaching the upper portion of the fastening member to the inside of the post.

According to one embodiment of the invention, the step engaging the protrusion with the side wall of the base part, comprises inserting the protrusion into the opening in the side wall.

### Brief description of the drawings

Aspects of the present disclosure will be described more fully hereinafter with reference to the accompanying drawings. The devices and methods disclosed herein can, however, be realized in many different forms and should not be construed as being limited to the aspects set forth herein. Like numbers in the drawings refer to like elements throughout.
Fig. 1a shows an example of a post unit according to the invention in a front view with hidden lines visible.
Fig. 1b shows the post unit in figure 1a in front perspective view.
Fig. 1c shows the post unit in figure 1a in a side view with hidden lines visible.
Fig. 1d shows the post unit in figure 1a in rear perspective view.
Fig. 1e shows the protrusion of the fastening member when the post is inserted in the base part in an enlarged view.
Fig. 2a shows a cross section through an example of a fastening member inserted and engaged with a base part of the post unit.
Fig. 2b shows the fastening member inserted and engaged with the base part in a perspective view.
Fig. 3a shows an example of a fastening member in a side view.
Fig. 3b shows the fastening member in a perspective view.
Fig. 3c shows the fastening member in a front view.
Fig. 4 shows an example of a safety road barrier including post units according to the invention.

### Detailed description

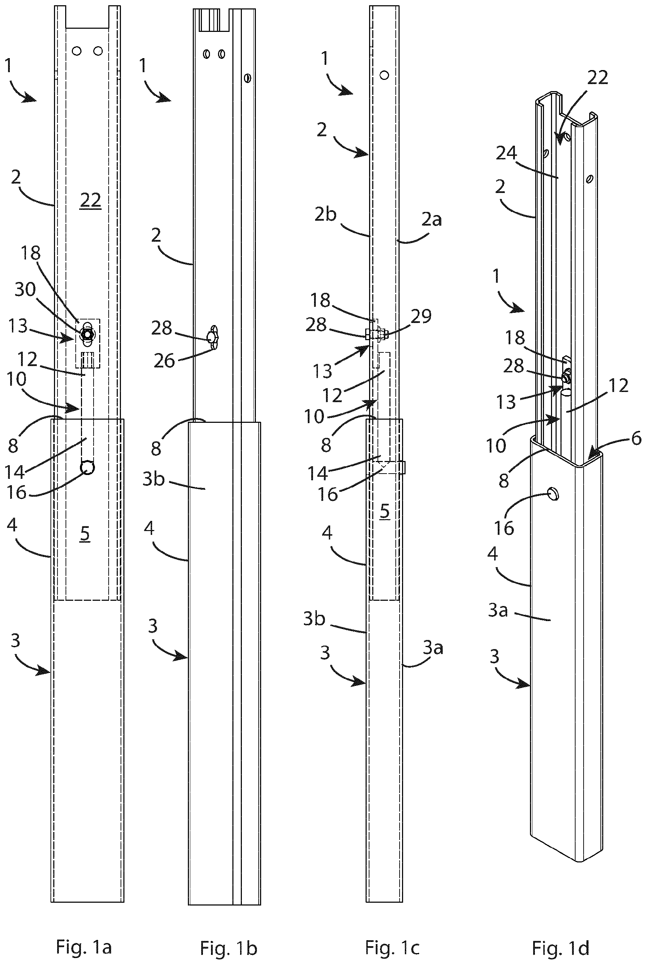

Figures 1a-d shows an example of a post unit 1 for a safety road barrier according to the invention in different views.

The post unit 1 comprises an elongated post 2 for attachment to rails of a guardrail, an elongated base part 3, which is to be set in the ground, and a fastening member 10 for fastening the post 2 to the base part 3 when the post is inserted into the base part, as shown in figures 1a-d. In this example, the post 2 has a partly rectangular cross-section. However, the post can have other shapes in a cross-section, such as elliptic, circular, or square.

The base part 3 has a hollow body 4 defining a space 5 for receiving the post 2. The base part 3 has an opening 6 at an upper end 8, as shown in figure 1d. The post 2 is adapted to be partly inserted into the space 5 in the base part through the opening 6 at the upper end 8 of the base part. In this example, the base part 3 has a rectangular cross-section having two long sides and two short sides. However, the base part can have other shapes in a cross-section, such as elliptic, circular, or square. The base part 3 has at least one side wall 3a. In this example, the base part 3 has two pairs of parallel side walls. A first pair of side walls defines the two long sides and a second pair of side walls defines the two short sides. The base part has a first side 3a and a second side wall 3b arranged opposite the first side wall 3a, as shown in figure 1c. Preferably, the post and the base part are made of metal.

The fastening member 10 is elongated and has an upper portion 12 comprising a fastening arrangement 13 for attaching the fastening member 10 to the post 2, and a lower portion 14 adapted to be inserted into the space 5 of the base part. The lower portion 14 comprises a protrusion 16 adapted to be engaged with the first side wall 3a of the base part 3 when the lower portion 14 is inserted in the base part 3. In this example, the post 2 is hollow and defines a space 22 inside the post, and the fastening member 10 is adapted to be partly inserted into the space 22 in post 2. The post 2 has a front wall 2a and a rear wall 2b, arranged opposite the front wall 2a, as seen in figure 1c.

At least the upper portion 12 of the fastening member 10 is inserted into the space 22 in post 2. In this example, the fastening arrangement 13 comprises a mounting plate 18 adapted to be attached to the inside of the hollow post 2 and fastening means in the form of a bolt 28 and a nut 29. In this example, most of the fastening member 10 is inserted into the space 22 inside the post 22 when the post unit is mounted. Alternatively, only the upper portion 12 of the fastening member 10 is inserted into the space 22. In one embodiment, the front wall 2a of the post is provided with an opening 24. In one example, the opening 24 is elongated and extends along the longitudinal axis of the post 2. Thus, the inside of the post 2 is accessible for attaching the upper portion 12 of the fastening member 10 to the inside of the post 2, as shown in figure 1d. The opening 24 is arranged in the front wall 2a of the post. The protrusion 16 extends through the opening 24 of the post 2 when the post is inserted into the base part. The opening 24 can have other shapes, for example, circular or square.

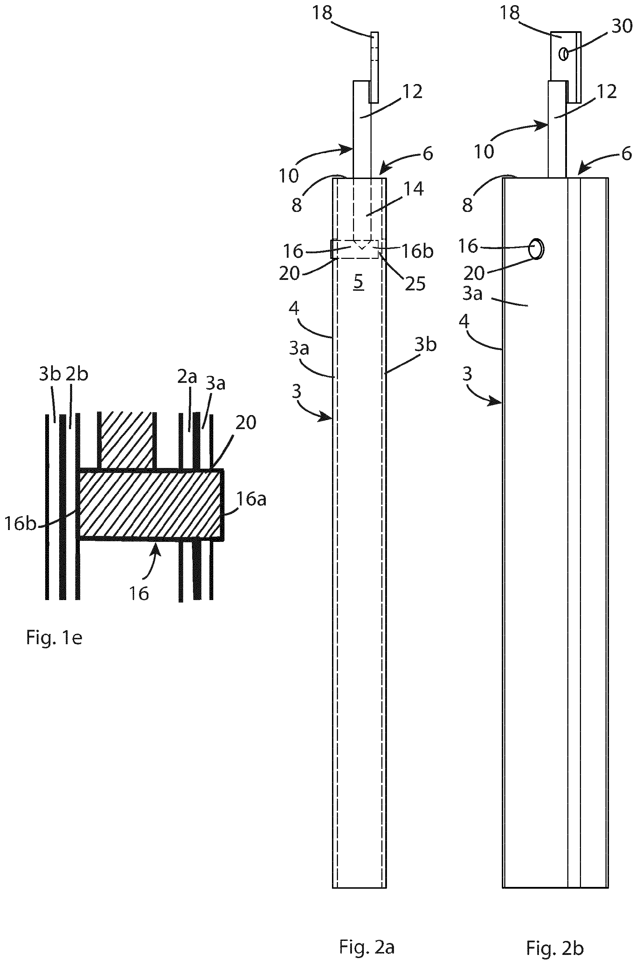

Alternatively, the fastening member 10 is inserted into the space 22 through an opening in the lower end of the post 5. In this example, a lower part of the post 2 is inserted into the base part 3, the lower portion of the fastening member 10 is inserted into the base part, the protrusion 16 is engaged with the first side wall 3a of the base part, and the upper portion 12 of the fastening member 10 is inserted into the post 2, as shown in figure 1 and 1c.

In one embodiment, the base part 3 comprises an opening 20 in the first side wall 3a, and the protrusion 16 is adapted to protrude into the opening 20 in the side wall 3a when the lower portion 14 is inserted into the space 5 in the base part 3. Suitably, the opening 20 is arranged in one of the side walls defining the long sides of the base part. This will reduce the length of the protrusion. Preferably, the opening 20 in the side wall 3a is circular, and the protrusion 16 has a circular cross section. This facilitates the insertion of the protrusion 16 in the opening 20. However, other shapes of the opening 20 is also possible, such as hexagonal or octagonal. Preferably, the diameter of the opening 20 is slightly larger than the diameter of the protrusion 16 so that there is a play between the protrusion 16 and the side wall 3a, when the protrusion 16 is inserted in opening 20 in the side wall 3a. The play is, for example, between 1 and 2 mm. This facilitated the insertion of the protrusion in the opening. Further, this allows the opening to be slightly deformed during installation of the base part into the ground. Alternatively, the protrusion 16 is tapering towards its end. To prevent deformation of the opening 20 during installation of the base part in the ground, it is suitable that the opening 20 in the first sidewall 3a is disposed at a distance from the upper end 8 of the base part 3. Suitably, the opening 20 is disposed at a distance of at least 40 mm from the upper end 8 of the base part 3, preferably at least 50 mm from the upper end 8 of the base part, and most preferably at least 60 mm from the upper end 8 of the base part.

Figure 1e shows the protrusion 16 of the fastening member 10 when the post 2 is inserted in the base part 3 in an enlarged view. The protrusion 16 is arranged so that it extends from the opening 20 in the first side wall 3a towards the second side wall 3b of the base part. The protrusion 16 ends in the vicinity of the second side wall 3b so that a gap 25 is formed between the second end 16b of the protrusion 16 and the second side wall 3b of the base part, as shown in figure 2a, to allow the rear wall 2b of the post 2 to be inserted between the second end 16b of the protrusion 16 and the second side wall 3b of the base part, as shown in figure 1e. The protrusion 16 extends from the opening 20 in the first side wall 3a to the rear wall 2b of the post 2 when the post is inserted into the base part. In one aspect, the second end 16b of the protrusion abuts on the rear wall 2b of the post 2 when the post is inserted into the base part 3. Preferably, the width of the gap 25 corresponds to the width of the rear wall 2b of the post 2 so that the rear wall will fit tightly between the between the second end 16b of the protrusion 16 and the second side wall 3b of the base part when the post 2 is inserted into the base part 3.

Figures 2a-b shows an example fastening member 10 inserted into the base part 3 of the post unit and engaged with the first side wall 3a. The lower portion 14 of the fastening member 10 is inserted into the base part 3. The protrusion 16 is adapted to be engaged with the side wall 3a by insertion through the opening 20 in the first side wall 3a. The protrusion 16 protrudes perpendicularly to a longitudinal axis of the base part 3. The protrusion is elongated in a direction perpendicularly to the longitudinal axis of the base part 3 and has a front end and a rear end. The front end of the protrusion is adapted to be inserted into the opening 20 of the base part. The length of the protrusion 16 is less than the width of the space 5 in the longitudinal direction of the protrusion, so that a gap 25 is formed between the rear end 16b of the protrusion 16 and the second side wall 3b of the base part, arranged opposite to the side wall 3a including the opening 20. The gap 25 facilitates the insertion of the protrusion 16 into the opening 20. Further, the gap 25 allows the rear wall 2b of the post 2 to be inserted between the rear end 16b of the protrusion 16 and the second side wall 3b of the base part.

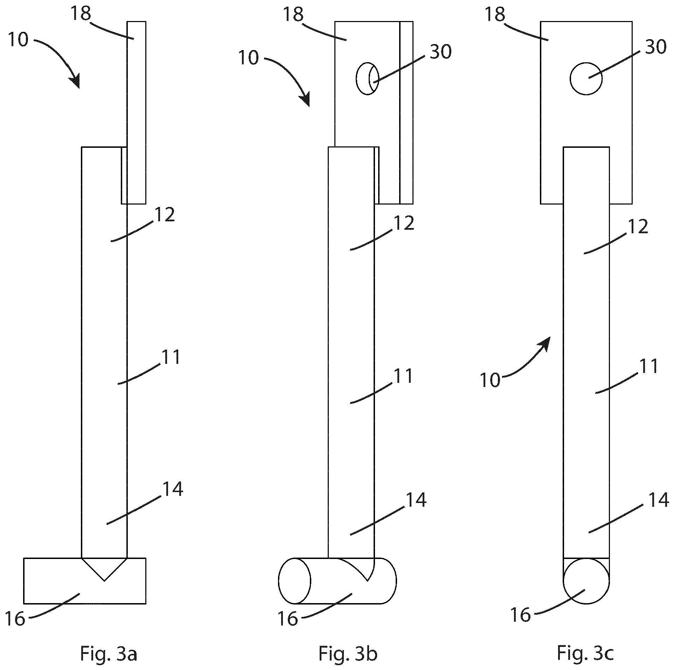

Figures 3a-c shows an example of a fastening member 10 in different views. The fastening member 10 comprises an elongated body 11 having an upper portion 12 comprising a mounting plate 18 for attaching the fastening member 10 to the post 2, and a lower portion 14 adapted to be inserted into the space 5 of the base part. The lower portion 14 of the elongated body is provided with the protrusion 16 adapted to be engaged with the first side wall 3a of the base part 3. The protrusion 16 is elongated and extends perpendicularly to a longitudinal axis of the elongate body 11. The protrusion 16 has a circular cross-section. In one embodiment, the mounting plate 18 has a through-hole 30 for receiving fastening means, such as a bolt 28. The post 2 is provided with a corresponding through-hole 26 for receiving the fastening means 28, as shown in figure 1b-c. In this example, the fastening arrangement 13 comprises a bolt 28 to be arranged in the through-holes 26, 30 and a nut for tightening the bolt.

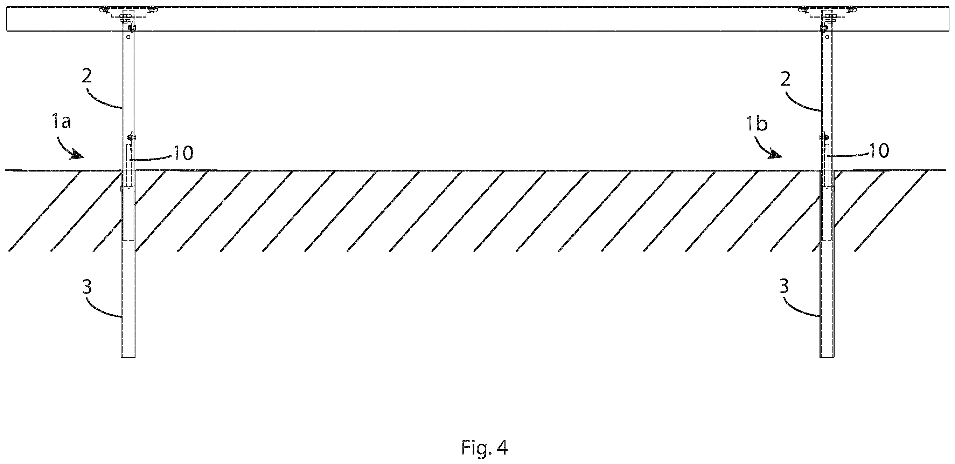

Figure 4 shows an example of a safety road barrier including at least two post units 1a-b according to the invention. The safety road barrier further comprises a guardrail 32 attached to the posts 2. The posts 1a-b are substantially vertically arranged and the guardrail 32 is substantially horizontally arranged.

Preferably, the base parts 3 are inserted into the ground such that and the upper end 8 of the base part is level with the ground. The posts 2 are inserted into the base parts 3 and are attached to the base parts by means of the fastening member 10. Thus, the post is prevented from being thrown away from the base part if the post or the rail is hit by a car.

In the following, an example of a method for assembling and installing the post unit 1 is described. In this example, the post unit is assembled on site. However, it is also possible to assemble the post unit during manufacturing of the post unit. In such case, the assembled post units are inserted into the ground.

In a first step, the base part 3 is inserted into the ground. Preferably, the base part 3 is inserted into the ground such that the upper end 8 of the base part is level with the ground, as shown in figure 4. This step is optional and can also be carried out after the post unit has been assembled. In a next step, the lower portion 14 of the fastening member 10, including the protrusion 16, is inserted into the base part 3 and the protrusion 16 is engaged with the side wall 3a of the base part 3. In one embodiment, the protrusion 16 is engaged with the first side wall 3a by inserting the protrusion 16 into the opening 20 in the side wall 3a, as shown in figure 2a. Thereafter, the post 2 is partly inserted into the base part 3. In one embodiment, the post 2 is inserted into the base part 3 such that the upper portion 12 of the fastening member 10 is disposed inside the post 2, as shown in figure 1. In this embodiment, the post 5 is partly surrounding the fastening member 10, and the protrusion 16 protrudes through the elongated opening 24 in the post 2 and into the opening 20 of the base part 3. In a last step, the upper portion 12 of the fastening member 10 is attached to the inside of the post 2. In one embodiment, the mounting plate 18 is attached to the inside of the post 2 by inserting a bolt through the through-hole 26 in the fastening arrangement and the through-hole 30 in the post. The bolt can be tightened by means of a nut 29, as shown in figure 1c. Alternatively, a pin can be used to lock the bolt if the bolt is unthreaded.

The present invention is not limited to the embodiments disclosed but may be varied and modified within the scope of the following claims. For example, instead of an opening, the side wall can be provided with a ledge for engaging the protrusion. The fastening arrangement 13 can be designed in different ways. For example, the fastening arrangement 13 may comprise screw joints.

### Reference numbers

1, 1a, 1b Post unit
2 Post
2a front wall of the post
2b rear wall of the post
3 Base part
3a first side wall of base part
3b second sidewall of base part
4 Hollow body
5 Space
6 Opening
8 Upper end of base part
10 Fastening member
11 Elongated body
12 Upper portion
13 Fastening arrangement
14 Lower portion
16 Protrusion
16a first end of protrusion
16b second end of protrusion
18 Mounting plate
20 Opening in the side wall
22 Space inside post
24 Elongated opening in the post
25 Gap
26 Through-hole in the post
28 Bolt
29 Nut
30 Through-hole in the fastening arrangement
32 Rail

## Claims

1. A post unit (1,1a-b) for safety road barriers, wherein the post unit (1,1a-b) comprises:
- a post (2),
- a base part (3) having a hollow body (4) defining a space (5) for receiving the post (2), and
- a fastening member (10) for fastening the post (2) to the base part (3) when the post is inserted into the base part, **characterized in that** the fastening member (10) is elongated and has an upper portion (12) comprising a fastening arrangement (13) for fastening the fastening member (10) to the post (2), and a lower portion (14) adapted to be inserted into the space (5) of the base part, the lower portion (14) comprises a protrusion (16) having a first end adapted to be engaged with a first side wall (3a) of the base part when the lower portion (14) is inserted in the base part (3), the fastening arrangement (13) and the post (2) comprises a respective through-hole (26, 30), and the fastening arrangement (13) comprises fastening means (28) to be arranged in the through-holes (26, 30) for attaching the upper portion (12) of the fastening member (10) to the post (2).

2. The post unit according to claim 1, wherein said fastening means (28) comprises a bolt.

3. The post unit according to claim 1 or 2, wherein said protrusion (16) is arranged so that it extends from the first side wall (3a) towards a second side wall (3b) of the base part, and ends at a distance from the second side wall (3b) so that a gap (25) is formed between the protrusion (16) and the second side wall (3b) for receiving a rear wall (2b) of the post (2).

4. The post unit according to claim 3, wherein the width of the gap (25) corresponds to the width of the rear wall (2b) of the post (2) so that the rear wall (2b) will fit tightly between the protrusion (16) and the second side wall (3b) of the base part when the post (2) is inserted into the base part (3).

5. The post unit according to claim 3 or 4, wherein the protrusion (16) is arranged so that a second end (16b) of the protrusion (16) abuts on the rear wall (2b) of the post (2) when the post is inserted into the base part (3).

6. The post unit according to any of the previous claims, wherein the base part (3) comprises an opening (20) in the first sidewall (3a), and a first end (16a) of the protrusion (16) is adapted to protrude into the opening (20) in the first side wall (3a) when the lower portion (14) is inserted into the space (5) in the base part (3).

7. The post unit according to claim 6, wherein the diameter of the opening (20) is larger than the diameter of the first end (16a) of the protrusion (16) so that there is a play between the protrusion (16) and the first side wall (3a), when the first end (16a) of the protrusion (16) is inserted in the opening (20).

8. The post unit according to any of the previous claims, wherein the post (2) is hollow, and the upper portion (12) of the fastening member (10) is adapted to be inserted into the hollow post (2) and to be attached to an inside of the hollow post (2).

9. The post unit according to any of the previous claims, wherein the post (2) comprises an elongated opening (24) extending along the longitudinal axis of the post such that the inside of the post (2) is accessible for attaching the upper portion (12) of the fastening member (10) to the inside of the post (2).

10. The post unit according to any of the previous claims, wherein a cross section of the base part (3) comprises two long sides and two short sides, and the opening (20) is arranged in the side wall (3a) of one of the long sides.

11. A safety road barrier comprising at least two post units (1a-b) according to any of the claims 1-10, and a guardrail (32) attached to the posts (2).

12. A method for assembling the post unit (1, 1a-b) according to claims 3 and 6, wherein the method comprises:
- inserting (S2) the lower portion (14) of the fastening member (10) into the base part (3),
- inserting the first end (16a) of the protrusion (16) into the opening (20) in the first side wall (3a) of the base part (3),
- inserting (S4) the post (2) partly into the base part (3) such that an upper portion (12) of the fastening member 10 is disposed inside the post (2), and a lower part of the post (2) is inserted in a gap (25) between the rear part of the protrusion (16) and the second side wall (3b) of the base part, and
- attaching (S5) the upper portion (12) of the fastening member (10) to the post (2) by means of the fastening arrangement (13).

## Patentansprüche

1. Pfosteneinheit (1,1a-b) für eine Straßenschutzplanke für eine Sicherheit, wobei die Pfosteneinheit (1,1a-b) umfasst:
- einen Pfosten (2),
- ein Basisteil (3), das einen Hohlkörper (4) aufweist, der einen Raum (5) zum Aufnehmen des Pfostens (2) definiert, und
- ein Befestigungselement (10) zum Befestigen des Pfostens (2) an dem Basisteil (3), wenn der Pfosten in das Basisteil eingeführt wird, **dadurch gekennzeichnet, dass** das Befestigungselement (10) länglich ist und einen oberen Abschnitt (12) aufweist, umfassend eine Befestigungsanordnung (13) zum Befestigen des Befestigungselements (10) an dem Pfosten (2), und einen unteren Abschnitt (14), der angepasst ist, um in den Raum (5) des Basisteils eingeführt zu werden, wobei der untere Abschnitt (14) einen Vorsprung (16) umfasst, der ein erstes Ende aufweist, das angepasst ist, um mit einer ersten Seitenwand (3a) des Basisteils in Eingriff genommen zu werden, wenn der untere Abschnitt (14) in das Basisteil (3) eingeführt wird, wobei die Befestigungsanordnung (13) und der Pfosten (2) jeweils ein Durchgangsloch (26, 30) umfassen, und die Befestigungsanordnung (13) ein Befestigungsmittel (28) umfasst, das in den Durchgangslöchern (26, 30) zum Anbringen des oberen Abschnitts (12) des Befestigungselements (10) an dem Pfosten (2) angeordnet werden soll.

2. Pfosteneinheit nach Anspruch 1, wobei das Befestigungsmittel (28) einen Bolzen umfasst.

3. Pfosteneinheit nach Anspruch 1 oder 2, wobei der Vorsprung (16) so angeordnet ist, dass er sich von der ersten Seitenwand (3a) zu einer zweiten Seitenwand (3b) des Basisteils erstreckt und in einem Abstand von der zweiten Seitenwand (3b) endet, sodass ein Spalt (25) zwischen dem Vorsprung (16) und der zweiten Seitenwand (3b) zum Aufnehmen einer Rückwand (2b) des Pfostens (2) ausgebildet ist.

4. Pfosteneinheit nach Anspruch 3, wobei die Breite des Spalts (25) der Breite der Rückwand (2b) des Pfostens (2) entspricht, sodass die Rückwand (2b) zwischen den Vorsprung (16) und die zweite Seitenwand (3b) des Basisteils dicht passt, wenn der Pfosten (2) in das Basisteil (3) eingeführt wird.

5. Pfosteneinheit nach Anspruch 3 oder 4, wobei der Vorsprung (16) so angeordnet ist, dass ein zweites Ende (16b) des Vorsprungs (16) an der Rückwand (2b) des Pfostens (2) anliegt, wenn der Pfosten in das Basisteil (3) eingeführt wird.

6. Pfosteneinheit nach einem der vorstehenden Ansprüche, wobei das Basisteil (3) eine Öffnung (20) in der ersten Seitenwand (3a) umfasst und ein erstes Ende (16a) des Vorsprungs (16) angepasst ist, um in die Öffnung (20) in der ersten Seitenwand (3a) vorzuspringen, wenn der untere Abschnitt (14) in den Raum (5) in dem Basisteil (3) eingeführt wird.

7. Pfosteneinheit nach Anspruch 6, wobei der Durchmesser der Öffnung (20) größer als der Durchmesser des ersten Endes (16a) des Vorsprungs (16) ist, sodass ein Spiel zwischen dem Vorsprung (16) und der ersten Seitenwand (3a) vorliegt, wenn das erste Ende (16a) des Vorsprungs (16) in die Öffnung (20) eingeführt wird.

8. Pfosteneinheit nach einem der vorstehenden Ansprüche, wobei der Pfosten (2) hohl ist und der obere Abschnitt (12) des Befestigungselements (10) angepasst ist, um in den hohlen Pfosten (2) eingeführt zu werden und um an einer Innenseite des hohlen Pfostens (2) angebracht zu werden.

9. Pfosteneinheit nach einem der vorstehenden Ansprüche, wobei der Pfosten (2) eine längliche Öffnung (24) umfasst, die sich entlang der Längsachse des Pfostens derart erstreckt, dass die Innenseite des Pfostens (2) zum Anbringen des oberen Abschnitts (12) des Befestigungselements (10) an der Innenseite des Pfostens (2) zugänglich ist.

10. Pfosteneinheit nach einem der vorstehenden Ansprüche, wobei ein Querschnitt des Basisteils (3) zwei lange Seiten und zwei kurze Seiten umfasst und die Öffnung (20) in der Seitenwand (3a) einer der langen Seiten angeordnet ist.

11. Straßenschutzplanke für die Sicherheit, umfassend mindestens zwei Pfosteneinheiten (1a-b) nach einem der Ansprüche 1 bis 10 und eine Leitplanke (32), die an den Pfosten (2) angebracht ist.

12. Verfahren zum Zusammenbauen der Pfosteneinheit (1, 1a-b) nach den Ansprüchen 3 und 6, wobei das Verfahren umfasst:
- Einführen (S2) des unteren Abschnitts (14) des Befestigungselements (10) in das Basisteil (3),
- Einführen des ersten Endes (16a) des Vorsprungs (16) in die Öffnung (20) in der ersten Seitenwand (3a) des Basisteils (3),
- teilweises Einführen (S4) des Pfostens (2) in das Basisteil (3), derart, dass ein oberer Abschnitt (12) des Befestigungselements 10 innenseitig des Pfostens (2) positioniert ist und ein unterer Teil des Pfostens (2) in einen Spalt (25) zwischen dem Rückteil des Vorsprungs (16) und der zweiten Seitenwand (3b) des Basisteils eingeführt wird, und
- Anbringen (S5) des oberen Abschnitts (12) des Befestigungselements (10) an dem Pfosten (2) mittels der Befestigungsanordnung (13).

## Revendications

1. Unité de montant (1, 1a-b) pour des barrières routières de sécurité, dans laquelle l'unité de montant (1, 1a-b) comprend :
- un montant (2),
- une partie de base (3) ayant un corps creux (4) définissant un espace (5) pour recevoir le montant (2), et
- un élément de fixation (10) pour fixer le montant (2) à la partie de base (3) lorsque le montant est inséré dans la partie de base, **caractérisée en ce que** l'élément de fixation (10) est allongé et a une partie supérieure (12) comprenant un agencement de fixation (13) pour fixer l'élément de fixation (10) au montant (2), et une partie inférieure (14) adaptée pour être insérée dans l'espace (5) de la partie de base, la partie inférieure (14) comprend une saillie (16) ayant une première extrémité adaptée pour être mise en prise avec une première paroi latérale (3a) de la partie de base lorsque la partie inférieure (14) est insérée dans la partie de base (3), l'agencement de fixation (13) et le montant (2) comprennent un trou traversant respectif (26, 30), et l'agencement de fixation (13) comprend un moyen de fixation (28) à agencer dans les trous traversants (26, 30) pour attacher la partie supérieure (12) de l'élément de fixation (10) au montant (2).

2. Unité de montant selon la revendication 1, dans laquelle ledit moyen de fixation (28) comprend un boulon.

3. Unité de montant selon la revendication 1 ou 2, dans laquelle ladite saillie (16) est agencée de sorte qu'elle s'étende de la première paroi latérale (3a) vers une seconde paroi latérale (3b) de la partie de base, et se termine à une distance de la seconde paroi latérale (3b) de sorte qu'un écart (25) soit formé entre la saillie (16) et la seconde paroi latérale (3b) pour recevoir une paroi arrière (2b) du montant (2).

4. Unité de montant selon la revendication 3, dans laquelle la largeur de l'écart (25) correspond à la largeur de la paroi arrière (2b) du montant (2) de sorte que la paroi arrière (2b) s'ajuste étroitement entre la saillie (16) et la seconde paroi latérale (3b) de la partie de base lorsque le montant (2) est inséré dans la partie de base (3).

5. Unité de montant selon la revendication 3 ou 4, dans laquelle la saillie (16) est agencée de sorte qu'une seconde extrémité (16b) de la saillie (16) bute contre la paroi arrière (2b) du montant (2) lorsque le montant est inséré dans la partie de base (3).

6. Unité de montant selon l'une quelconque des revendications précédentes, dans laquelle la partie de base (3) comprend une ouverture (20) dans la première paroi latérale (3a), et une première extrémité (16a) de la saillie (16) est adaptée pour faire saillie dans l'ouverture (20) dans la première paroi latérale (3a) lorsque la partie inférieure (14) est insérée dans l'espace (5) dans la partie de base (3).

7. Unité de montant selon la revendication 6, dans laquelle le diamètre de l'ouverture (20) est supérieur au diamètre de la première extrémité (16a) de la saillie (16) de sorte qu'il existe un jeu entre la saillie (16) et la première paroi latérale (3a), lorsque la première extrémité (16a) de la saillie (16) est insérée dans l'ouverture (20).

8. Unité de montant selon l'une quelconque des revendications précédentes, dans laquelle le montant (2) est creux, et la partie supérieure (12) de l'élément de fixation (10) est adaptée pour être insérée dans le montant creux (2) et pour être attachée à l'intérieur du montant creux (2).

9. Unité de montant selon l'une quelconque des revendications précédentes, dans laquelle le montant (2) comprend une ouverture allongée (24) s'étendant le long de l'axe longitudinal du montant de sorte que l'intérieur du montant (2) soit accessible pour attacher la partie supérieure (12) de l'élément de fixation (10) à l'intérieur du montant (2).

10. Unité de montant selon l'une quelconque des revendications précédentes, dans laquelle une section transversale de la partie de base (3) comprend deux côtés longs et deux côtés courts, et l'ouverture (20) est agencée dans la paroi latérale (3a) de l'un des côtés longs.

11. Barrière routière de sécurité comprenant au moins deux unités de montants (1a-b) selon l'une quelconque des revendications 1 à 10, et une glissière de sécurité (32) attachée aux montants (2).

12. Procédé d'assemblage de l'unité de montant (1, 1a-b) selon les revendications 3 et 6, dans lequel le procédé comprend :
- l'insertion (S2) de la partie inférieure (14) de l'élément de fixation (10) dans la partie de base (3),
- l'insertion de la première extrémité (16a) de la saillie (16) dans l'ouverture (20) dans la première paroi latérale (3a) de la partie de base (3),
- l'insertion (S4) du montant (2) partiellement dans la partie de base (3) de sorte qu'une partie supérieure (12) de l'élément de fixation 10 soit disposée à l'intérieur du montant (2), et une partie inférieure du montant (2) soit insérée dans un écart (25) entre la partie arrière de la saillie (16) et la seconde paroi latérale (3b) de la partie de base, et
- l'attachement (S5) de la partie supérieure (12) de l'élément de fixation (10) au montant (2) au moyen de l'agencement de fixation (13).
